Europäisches Patentamt

European Patent Office

Office européen des brevets

(19)

(11) Numéro de publication : **0 448 432 A1**

(12) # DEMANDE DE BREVET EUROPEEN

(21) Numéro de dépôt : **91400564.0**

(22) Date de dépôt : **01.03.91**

(51) Int. Cl.⁵ : **C04B 41/87, C08L 83/16, C08G 85/00, C08G 79/08**

---

(30) Priorité : **12.03.90 FR 9003365**

(43) Date de publication de la demande :
**25.09.91 Bulletin 91/39**

(84) Etats contractants désignés :
**AT BE CH DE DK ES FR GB GR IT LI LU NL SE**

(71) Demandeur : **RHONE-POULENC CHIMIE**
**25, quai Paul Doumer**
**F-92408 Courbevoie Cédex (FR)**

(72) Inventeur : **Ardaud, Pierre**
**133, avenue Clémenceau**
**F-69110 Sainte-Foys-Les-Lyon (FR)**
Inventeur : **Chassagneux, Evelyne**
**Rue des Grès**
**F-69390 Millery (FR)**
Inventeur : **Mignani, Gérard**
**2, avenue des Frères Lumière**
**F-69008 Lyon (FR)**

(74) Mandataire : **Dubruc, Philippe**
**RHONE-POULENC CHIMIE Service Brevets**
**Chimie 25, quai Paul-Doumer**
**F-92408 Courbevoie Cédex (FR)**

---

(54) **Procédé de revêtements en céramique de pièces à base de carbone.**

(57) Procédé de revêtement en céramique d'une pièce à base de carbone caractérisé en ce que :
— (a) la pièce est imprégnée d'un mélange de polymères précurseurs céramiques, mélange constitué de 10 - 95 % en poids d'au moins un polyborazane et de 90 - 5 % en poids d'au moins un polysilazane,
— (b) la pièce revêtue est soumise à un traitement de pyrolyse, sous atmosphère inerte, réductrice ou sous vide, en vue de transformer le mélange en céramique.

EP 0 448 432 A1

EP 0 448 432 A1

## PROCEDE DE REVETEMENTS EN CERAMIQUE DE PIECES A BASE DE CARBONE

L'invention a trait à un procédé de revêtements en céramique de pièces à base de carbone.

Les pièces à base de carbone présentent l'inconvénient de se détériorer par oxydation à des températures voisines de 800°C, ce qui les rend inutilisables pour de nombreuses applications.

Il est, par ailleurs, connu que les céramiques ont la propriété de protéger de l'oxydation des substrats normalement oxydables.

L'idée d'utiliser cette propriété des céramiques pour des substrats oxydables est décrite dans de nombreux articles et brevets. Ainsi, la demande de brevet EP-A-0 325 483 décrit un polymère organoborosilazane obtenu par réaction d'un triorganoxyboroxyne avec un polysilazane, les matériaux céramiques obtenus à partir de ce polymère sont particulièrement utilisés pour leur propriété de protéger de l'oxydation des substrats normalement oxydables.

Un but de l'invention est de proposer un procédé de revêtement de pièces à base de carbone permettant à ces substrats de se protéger de l'oxydation à des températures voisines de 800°C.

Un autre but de la présente invention est de proposer un procédé de revêtement de pièces à base de carbone à partir de polymères non oxydés précurseurs de céramiques.

L'intérêt d'une telle voie polymère réside surtout dans les possibilités de mise en forme de ce type de produits et, plus particulièrement appliquée à la présente invention, la possibilité de mettre sous la forme de revêtement plus ou moins mince le polymère, pour le transformer, par la suite, en céramique.

Ces buts et d'autres sont atteints par la présente invention qui concerne en effet un procédé de revêtement en céramique d'une pièce à base de carbone caractérisé en ce que :

    – (a) la pièce est imprégnée d'un mélange de polymères précurseurs céramiques, mélange constitué de 10 - 95 % en poids d'au moins un polyborazane et de 90 - 5 % en poids d'au moins un polysilazane,

    – (b) la pièce revêtue est soumise à un traitement de pyrolyse, sous atmosphère inerte, réductrice ou sous vide, en vue de transformer le mélange de précurseurs organométalliques en céramique.

A titre d'exemples de pièces à base de carbone, on peut citer : les graphites, les fibres de carbone, les matériaux composites.

Les organopolysilazanes et les organopoly(disilyl)silazanes, dénommés auparavant et ultérieurement polysilazanes, sont des produits bien connus se présentant sous la forme de monomères, d'oligomères et de polymères cycliques ou linéaires et également sous la forme de polymères résineux. Ces polysilazanes peuvent être préparés suivant une large variété de procédés à partir d'une gamme étendue de produits de départ.

Parmi les organopolysilazanes convenant pour la présente invention, on peut notamment citer n'importe quel produit de réaction entre : (a) au moins un organohalogénosilane de formule (I):

$$R_aX_{4-a}Si \quad (I)$$

dans laquelle X désigne un halogène et les radicaux R, identiques ou différents, sont choisis parmi l'hydrogène, un radical alkyle linéaire ou ramifié éventuellement halogéné, un radical cycloalkyle, un radical aryle tel que le radical phényle et naphtyle, un radical arylalkyle ou alkylaryle, un radical alcényle tel que le radical vinyle ou allyle, un radical alcynyle tel le radical éthynyle ou propynyle, et l'indice a étant égal à 0, 1, 2 ou 3, et (b) l'ammoniac ou un composé organique ou organosilylé comportant au moins un groupement $NH_2$ ou NH comme par exemple, les amines primaires ou secondaires, les silylamines, les amides, les hydrazines, les hydrazides, etc...

Dans la formule (I), comme exemples de radicaux R alkyle, on peut citer les radicaux méthyle, éthyle, propyle, butyle, pentyle, hexyle, heptyle et octyle ; R cycloalkyle, on peut citer les radicaux cyclopentyle, cyclohexyle et cycloheptyle ; R arylalkyle : on peut citer les radicaux benzyle, phényléthyle ; R alkylaryle, on peut citer les radicaux tolyle et xylyle.

A titre d'exemple, comme organohalogénosilane utilisable seul ou en mélange, on peut citer :

$CH_3HSiCl_2$, $H_2SiCl_2$, $(CH_3)_2HSiCl$, $HSiCl_3$

$(CH_3)_2SiCl_2$, $(CH_3)_3SiCl$, $CH_3SiCl_3$, $SiCl_4$

$(CH_3)_2Si(CH_2Cl)_2$, $(CH_3)_3SiCH_2Cl$, $CH_3Si(CH_2Cl)_3$

$(C_6H_5)_2SiCl_2$, $(C_6H_5)(CH_3)SiCl_2$, $C_6H_5SiCl_3$

$(CH_3)(CH_3CH_2)SiCl_2$, $(CH_3)(CH_2 = CH)SiCl_2$

$(CH_3)_2 (CH_2 = CH) SiCl$, $(C_6H_5)_2 (CH_2 = CH)SiCl$

$(C_6H_5)(CH_2 = CH) SiCl_2$, $CH_3(C_6H_5)(CH_2 = CH) SiCl$.

Comme exemple de composés comportant au moins un groupement $NH_2$ ou NH et utilisables pour la synthèse des organopolysilazanes ci-dessus, on peut citer : l'ammoniac, la méthylamine, la diméthylamine, l'éthylamine, la cyclopropylamine, l'hydrazine, la méthylhydrazine, l'éthylènediamine, l'hexaméthylènediamine, l'aniline, la méthylaniline, la diphénylamine, la toluidine, la guanidine, l'aminoguanidine, l'hexaméthyldisila-

2

zane, le diphényltétraméthyldisilazane, le tétraphényldiméthyldisilazane, le tétraméthyldivinyldisilazane, le diméthyldiphényldivinyldisilazane et le tétraméthyldisilazane.

Les organopolysilazanes obtenus en fin de réaction englobent plus spécifiquement :

1. - les polymères linéaires répondant aux formules:

$$H_2N\ (R_2SiNH)_p\ SiR_2\ NH_2\quad (II)$$

et

$$R_3SiNH(R_2SiNH)_{p'}\ SiR_3\quad (III)$$

dans lesquelles R a la signification donnée pour la formule (I) ; p et p' sont des nombres entiers pouvant être compris entre 1 et 1000 généralement entre 3 et 300.

Les polymères de formule (II) peuvent être préparés par mise en contact de diorganodichlorosilanes avec de l'ammoniac, et ceux de formule (III) par réaction d'ammoniac sur un triorganochlorosilane ou un mélange de diorganodichlorosilane et de triorganochlorosilane (voir brevet français FR-A-1 086 932, brevet américain US-A-2 564 674).

De façon générale, la réaction d'organohalogénosilane sur une organoamine est décrite dans les brevets américains US-A-3 853 567 et US-A-3 892 583 et la réaction d'organohalogénosilane sur un disilazane est décrite dans le brevet belge BE-A-888 787.

2. - les polymères cycliques répondant à la formule:

$$(R_2SiNH)_n\quad (IV)$$

dans laquelle n est compris entre 3 et 10, généralement n = 3,4 et R a la signification donnée pour la formule (I) ci-dessus. Ils sont décrits notamment dans le brevet britannique GB-A-881178.

3. - les polymères résineux formés de motifs choisis parmi ceux de formule $R_3SiNH_{0,5}$, $R_2SiNH$, $RSiNH_{1,5}$, $Si(NH)_2$.

Ils sont avantageusement préparés par mise en contact des organochlorosilanes correspondant ou des mélanges de ces silanes, avec de l'ammoniac, de préférence en milieu solvant organique (voir brevets français FR-A-1 379 243, FR-A-1 392 853 et FR-A-1 393 728).

Les organopoly(disilyl)silazanes de départ susceptibles d'être utilisés pour le procédé conforme à l'invention, sont également des produits bien connus en soi et aisés à préparer. Ils peuvent être notamment préparés par action : (a) de l'ammoniac ou d'un composé organique ou organosilylé comportant au moins un groupement $NH_2$ ou NH comme par exemple les amines primaires ou secondaires, les silylamines, les amides et les hydrazines, etc..., sur (b) au moins un organohalogénodisilane de formule :

$$R_bX_{3-b}Si\ Si\ R_cX_{3-c}\quad (V)$$

dans laquelle les radicaux R identiques ou différents ont la même signification que ci-dessus et b est égal à 0,1, 2 ou 3 et c est égal à 0, 1 ou 2, et X est un halogène, généralement le chlore.

Comme exemple de composés de formule (V) on peut citer:

$(CH_3)_2\ ClSiSi\ (CH_3)_2\ Cl$, $(CH_3)_2Cl\ SiSi\ CH_3\ Cl_2$

$CH_3\ Cl_2\ SiSi\ CH_3\ Cl_2$

Comme exemples de composés comportant au moins un groupement $NH_2$ et NH utilisables pour la synthèse des poly(disilyl)silazanes, on peut citer les mêmes composés que ceux cités ci-dessus pour l'aminolyse des organohalogénomonosilanes.

De manière générale, la réaction d'halogénodisilane, en présence éventuellement d'halogenosilane, sur l'ammoniac est décrite dans le brevet européen EP-A-75 826. La réaction d'halogénodisilane sur un disilazane est décrite dans le brevet français FR-A-2 497 812.

Enfin, comme décrit dans le brevet EP-A-75 826, il est possible de préparer des organopoly (disilyl) silazanes-silazanes par réaction de dérivés aminés cités précédemment sur des mélanges de produits halogénés de formule (I) et (V) ci-dessus.

Les polysilazanes de départ préparés à partir d'ammoniac sont généralement appelés ammonolysats et les polysilazanes de départ préparés à partir d'un composé aminé comme indiqué ci-dessus sont appelés aminolysats qui incluent donc les ammonolysats.

Bien entendu, il est également possible d'utiliser à titre de polysilazanes de départ des polysilazanes qui, issus des réactions d'aminolyse décrites ci-dessus, ont subi en outre des traitements catalytiques bien connus destinés à provoquer, suivant la nature de l'aminolysat, une polymérisation et/ou une copolymérisation et/ou un réarrangement des molécules, et ceci dans le but d'augmenter encore leur poids moléculaire, mais tout en gardant aux polysilazanes obtenus leur caractère fusible et soluble dans les solvants organiques.

Les conditions de mise en oeuvre de tels traitements catalytiques sont décrites notamment dans les documents suivants, tous cités à titre de références non limitatives : JP-A-79/93 100, US-A-3 007 886, US-A-3-187 030 et FR-A-2 577 933.

Parmi les polyborazanes convenant pour la présente invention, on peut notamment citer les produits décrits ou les produits obtenus par les procédés décrits dans les brevets US 4.581.468, US 4.707.556, dans les brevets déposés au nom de la Demanderesse FR-A-2.620.443, FR-A-2.620.454, FR-A-2.620.455, FR-A-2.629.463, et dans les demandes de brevets déposées au nom de la Demanderesse :

– FR 88.13111 déposée le 6.10.1988, ce procédé consistant à introduire progressivement, en maintenant le milieu réactionnel à une température comprise entre environ

– 100°C et 0°C, un composé silazane présentant au moins un groupement ≡Si-NH-Si≡ en excès dans un trihalogénoborane,

– FR 88.13112 déposée le 6.10.1988, les polymères étant obtenus notamment en faisant réagir le B-trichloroborazine avec un produit de formule : $BCl_2-N(SiMe_3)_2$ et un composé présentant au moins un groupement $NH_2$,

– FR 89.02169 déposée le 20.02.1989, dans laquelle le procédé consiste à faire réagir au moins un B-trihalogénoborazine de formule : $(BX-NH)_3$ avec au moins une amine primaire de formule : $H_2N-R$, formules dans lesquelles X représente un halogène et R un radical hydrocarboné, éventuellement substitué, contenant inclusivement entre 1 et 6 atomes de carbone,

– FR 89.05177 déposée le 13.04.1989, dans laquelle le procédé consiste à faire réagir au moins un trihalogénoborane avec un excès molaire d'au moins un groupement ≡Si-NH-Si≡ à température ambiante,

– FR 89.10939 déposée le 10.08.1989, dans laquelle le procédé consiste à faire réagir entre eux un mélange de trihalogénoborane, de disilazane et de B-trichloroborazine.

On utilise, de préférence, le produit obtenu par le procédé décrit dans la demande de brevet français FR 89.02169.

Le mélange des deux polymères précurseurs de céramiques s'effectue en masse quand lesdits polymères sont liquides, s'effectue dans un solvant organique quand au moins l'un desdits polymères est solide, solvant organique tel que notamment le chlorure de méthylène, le dichlorométhane, le trichloroéthane, l'isopropyléther, l'éthylbutyléther, le dioxane, le tétrahydrofurane, l'hexane, l'heptane, l'octane, le cyclohexane, le benzène, le xylène et le toluène.

La pièce à base de carbone est imprégnée de ce mélange de polymères de façon à former un revêtement ayant l'épaisseur désirée, épaisseur pouvant atteindre jusqu'à environ 100 µm. L'épaisseur désirée est atteinte soit par une seule imprégnation, soit par plusieurs successives. De façon générale, après chaque imprégnation, le solvant présent est évaporé.

Il est important jusqu'à l'étape de pyrolyse, de laisser les polymères dans une atmosphère inerte, telle que l'azote.

Le traitement de pyrolyse, c'est-à-dire la minéralisation du mélange de polymères s'effectue à une température comprise, en général, entre 700 et 1400°C, de préférence entre 800 et 1200°C, sous atmosphère inerte ou réductrice ou sous vide.

Selon une variante de l'invention, on peut, lorsque la température du traitement de pyrolyse augmente, modifier l'atmosphère: passer d'une atmosphère inerte à une atmosphère réductrice ($NH_3$ par exemple), ou passer d'une atmosphère réductrice à une atmosphère inerte ; ceci permettant de changer la nature de la céramique obtenue. On modifie l'atmosphère, de préférence, lorsque la température du traitement de pyrolyse est voisine de 800°C.

De façon surprenante, la Demanderesse a constaté un effet synergique de la propriété "résistance à l'oxydation" de la céramique obtenue par le mélange de polymères, cette propriété ayant été comparée à celle des céramiques obtenues soit par un précurseur polyborazane, soit par un précurseur polysilazane. On utilise un mélange constitué de 10 - 95 % en poids d'au moins un polyborazane et de 90 - 5 % en poids d'au moins un polysilazane et, de préférence, constitué de 20 - 90 % en poids d'au moins un polyborazane et de 80 - 10 % en poids d'au moins un polysilazane.

Les propriétés physiques et la stabilité thermique de la pièce à base de carbone sont améliorées par le revêtement céramique.

Les exemples suivants illustrent l'invention.

Dans ce qui suit ou ce qui précède, sauf mentions contraires expresses, les % sont en poids.

Me représente le radical méthyle.

Obtention du polysilazane

On introduit dans un réacteur de 10 litres sous azote 804 g (5,37 moles) de $MeSiCl_3$, 464 g (3,59 moles) de $Me_2SiCl_2$ et 7,2 litres d'éther isopropylique.

Le mélange est refroidi à 5°C puis 750 g d'ammoniac est ajouté.

Le débit d'ammoniac est fixé de façon que la durée de réaction soit environ de 4 heures. Le chlorure d'ammonium formé est éliminé par filtration puis lavé trois fois avec de l'éther isopropylique. Les différents filtrats récupérés sont concentrés à 50 % en poids. Le rendement global de la réaction est de 85 % en poids.

Cette solution est traitée avec l'acide triflique gazeux selon les modalités pratiques définies dans la demande de brevet français FR-A-2.577.933.

La solution est ensuite évaporée (élimination du solvant). Le produit obtenu est solide, son point de ramollissement est de 140°C. Le polysilazane obtenu est mis en solution dans le toluène à 20 % massique.

## Obtention du polyborazane

Dans un réacteur de 3 litres sous azote on introduit 57,2 g (0,311 mole) de B-tricholoroborazine et 1785 g de toluène sec, après agitation la solution est totalement limpide.

On ajoute à la température ambiante 77 g (2,48 moles) de méthylamine. La réaction est exothermique : température de la masse réactionnelle atteint 50°C.

La durée de l'introduction du méthylamine est de 90 min.

On porte à reflux (109°C), après 30 min d'agitation, durant 3 heures.

On refroidit puis on filtre sous azote et on récupère 1489 g d'une solution limpide.

La solution obtenue, après évaporation du solvant, est séchée. On récupère 32,9 g d'une produit blanc soluble dans un solvant organique.

Ce produit est dissous dans le toluène à 20 % massique.

## Exemple comparatif 1

Une pastille de graphite est suspendue dans une thermobalance, elle est chauffée sous air à 10°C/min jusqu'à une température de 800°C puis est laissée en isotherme.

A une température de 800°C et après 1 minute la perte de masse est de 26 %. Après 1 heure à 800°C, la perte de masse est de 100 %.

## Exemple comparatif 2

Une pastille identique à l'exemple comparatif 1 est imprégnée de polysilazane puis est pyrolysée à 1000°C sous ammoniac.

La pastille revêtue est testée comme dans l'exemple comparatif 1 :

A une température de 800°C et après 1 minute la perte de masse est de 13 %. Après 1 heure à 800°C, elle est de 80 %.

## Example comparatif 3

Une pastille identique à l'exemple comparatif 1 est imprégnée de polyborazane puis est pyrolysée sous ammoniac à 1000°C.

La pastille revêtue est testée comme dans l'exemple comparatif 1 :

A une température de 800°C et après 1 minute la perte de masse est de 6 %. Après 1 heure à 800°C, elle est de 42 %.

## Exemples 4 à 7

On prépare différents mélanges de polyborazane et de polysilazane.

Chaque mélange est utilisé pour imprégner une pastille de carbone identique à l'exemple comparatif 1 puis chaque pastille imprégnée est traitée comme dans les exemples précédents.

Le tableau suivant rassemble les résultats.

| EXEMPLES | 1 | 2 | 4 | 5 | 6 | 7 | 3 |
|---|---|---|---|---|---|---|---|
| % polyborazane | 0 | 0 | 15 | 50 | 75 | 90 | 100 |
| % polysilazane | 0 | 100 | 85 | 50 | 25 | 10 | 0 |
| Perte de masse après 1 minute à 800°C | 26 | 13 | 5 | 3,5 | 4 | 5 | 6 |
| Perte de masse après 1 heure à 800°C | 100 | 80 | 35 | 15 | 20 | 30 | 42 |

**Revendications**

1. Procédé de revêtement en céramique d'une pièce à base de carbone caractérisé en ce que :
   – (a) la pièce est imprégnée d'un mélange de polymères précurseurs céramiques, mélange constitué de 10 - 95 % en poids d'au moins un polyborazane et de 90 - 5 % en poids d'au moins un polysilazane,
   – (b) la pièce revêtue est soumise à un traitement de pyrolyse, sous atmosphère inerte, réductrice ou sous vide, en vue de transformer le mélange en céramique.

2. Procédé selon la revendication 1 caractérisé en ce que le mélange de polymères précurseurs céramiques est constitué de 20 - 90 % en poids d'au moins un polyborazane et de 80 - 10 % en poids d'au moins un polysilazane.

3. Procédé selon l'une des revendications précédentes caractérisé en ce que le mélange des deux polymères précurseurs céramiques s'effectue en masse ou dans un solvant organique.

4. Procédé selon l'une des revendications 1 à 3 caractérisé en ce que, lorsque la température du traitement de pyrolyse (b) augmente, on passe d'une atmosphère réductrice à une atmosphère inerte.

5. Procédé selon l'une des revendications 1 à 3 caractérisé en ce que, lorsque la température du traitement de pyrolyse (b) augmente, on passe d'une atmosphère inerte à une atmosphère réductrice.

6. Procédé selon l'une des revendications 4 ou 5 caractérisé en ce que la modification d'atmosphère s'effectue lorsque la température du traitement de pyrolyse est voisine de 800°C.

7. Pièce à base de carbone susceptible d'être obtenue par le procédé de l'une quelconque des revendications précédentes.

))) Office européen
des brevets

# RAPPORT DE RECHERCHE EUROPEENNE

Numero de la demande

EP 91 40 0564

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | EP-A-0 278 734 (ULTRASYSTEMS DEFENCE AND SPACE, INC.) * page 2, lignes 17-50; page 3, lignes 15-36; page 4, ligne 58 - page 5, ligne 48; page 7, ligne 38 - page 65; page 8, lignes 40-52; revendications 1,4,9,19,21 * --- | 1-4 | C 04 B 41/87 C 08 L 83/16 C 08 G 85/00 C 08 G 79/08 |
| A | WO-A-8 802 003 (SRI INTERNATIONAL) * résumé; revendications 1,5,7,10,25; figure 1; page 1, ligne 8 - page 2, ligne 8; page 6, ligne 14 - page 7, ligne 28; page 10, ligne 6 - page 12, ligne 18; page 18, ligne 1 - page 19, ligne 3; page 22, lignes 1-18 * --- | 1-3 | |
| D,A | EP-A-0 325 483 (ETHYL CORPORATION) * résumé; revendications 1-2,9-10; page 2, ligne 32 - page 3, ligne 18; page 3, lignes 55-65; page 8, ligne 60 - page 9, ligne 20 * --- | 1-3,7 | |
| A | GB-A-2 163 761 (I. TANIGUCHI ET AL) * résumé; revendications 1,3,5; page 1, lignes 8-28; page 1, ligne 49 - page 2, ligne 36 * --- | 1-3 | DOMAINES TECHNIQUES RECHERCHES (Int. Cl.5) C 04 B C 08 L C 08 G C 09 D |
| A | WORLD PATENT INDEX LATEST, Derwent Publications Ltd, LONDON, GB, semaine 8609 & JP-A-61 010 090 (Furukawa Mining Co, Ltd) 17.01.1986 * abrégé * --- -/- | 1,7 | |

Le présent rapport a été établi pour toutes les revendications

| Lieu de la recherche | Date d'achèvement de la recherche | Examinateur |
|---|---|---|
| LA HAYE | 19-06-1991 | NORGREN-OLSSON |

Office européen
des brevets

**RAPPORT DE RECHERCHE EUROPEENNE**

Page     2

Numero de la demande

EP   91 40 0564

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 337 832  (AEROSPATIALE SOCIETE NATIONALE) <br> * résumé; revendications 1,4,9-10; colonne 2, ligne 63 – colonne 3, ligne 26; exemple 3 * <br> ----- | 1,3 | |

**DOMAINES TECHNIQUES RECHERCHES (Int. Cl.5)**

Le présent rapport a été établi pour toutes les revendications

| Lieu de la recherche | Date d'achèvement de la recherche | Examinateur |
|---|---|---|
| LA HAYE | 19-06-1991 | NORGREN-OLSSON |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P0403)